# EUROPEAN PATENT SPECIFICATION

(11) **EP 4 429 229 B1**
(45) Date of publication and mention of the grant of the patent: **24.06.2026**
(21) Application number: 22914023.1
(22) Date of filing: 02.12.2022
(51) Int. Cl.: H04N 5/77, H04N 5/92, G06F 13/40, H04N 21/2343, H04N 21/218, H04N 5/44, H04N 7/18, H04N 23/60, H04N 23/80

(54) **IMAGE CAPTURE CARD, IMAGE CAPTURE METHOD, AND IMAGE CAPTURE SYSTEM**
BILDERFASSUNGSKARTE, BILDERFASSUNGSVERFAHREN UND BILDERFASSUNGSSYSTEM
CARTE DE CAPTURE D'IMAGE, PROCÉDÉ DE CAPTURE D'IMAGE ET SYSTÈME DE CAPTURE D'IMAGE

(30) Priority: 29.12.2021 CN 202111650739
(43) Date of publication of application: 11.09.2024
(73) Proprietor: Hangzhou Hikrobot Co., Ltd., Hangzhou, Zhejiang 310051 (CN)
(72) Inventor: LOU, Jiaxiang, Hangzhou, Zhejiang 310051 (CN); YU, Minmin, Hangzhou, Zhejiang 310051 (CN); YU, Zhao, Hangzhou, Zhejiang 310051 (CN); CHENG, Yalang, Hangzhou, Zhejiang 310051 (CN); JIANG, Chengyu, Hangzhou, Zhejiang 310051 (CN); YAO, Yan, Hangzhou, Zhejiang 310051 (CN)
(74) Representative: Goddar, Heinz J.
(86) International application number: PCT/CN2022/136127
(87) International publication number: WO 2023/124768

(56) References cited:
- CN-A- 1 722 810
- CN-A- 103 647 925
- CN-A- 104 572 574
- CN-A- 113 301 313
- CN-A- 113 301 313
- CN-A- 113 572 941
- CN-A- 114 286 035
- CN-U- 205 375 584
- CN-U- 205 375 584
- CN-Y- 2 845 007
- JP-A- 2011 018 248
- TELEDYNE DALSA: "Deploying GigE Vision in Real-Time Industrial Imaging", IMAGING & MACHINE VISION EUROPE, 8 June 2002 (2002-06-08), pages 1 - 13, XP055750388, Retrieved from the Internet <URL:https://www.imveurope.com/white-paper/deploying-gige-vision-real-time-industrial-imaging> [retrieved on 20201113]

## Description

### TECHNICAL FIELD

The present disclosure relates to the field of image technology, and in particular, to frame grabbers, image capture methods, and image capture systems.

### BACKGROUND

In some image capture scenarios, an industrial control computer may communicate with a plurality of industrial cameras through a switch, or an industrial control computer may be directly connected to an industrial camera. The industrial control computer acquires image data of the industrial camera through a network card. Image data is, for example, the network data packet transmitted in accordance with transmission protocols such as GigE Vision. The processor of the industrial control computer may perform operations such as decoding, packet loss detection, image framing, and lossless image decompression on image data in accordance with a transmission protocol.

As the resolution, frame rate, line rate, and other indices of industrial cameras increase, the amount of image data that industrial control computers need to process has also greatly increased.
CN113301313A discloses an image data processing and transmission method and system. The method comprises: an image test box acquiring raw image data; the image test box performing lossless compression processing on the raw image data using a preset lossless image compression algorithm to obtain compressed image data; the image test box transmitting the compressed image data to an image acquisition card via optical fiber, wherein the image acquisition card decompresses the compressed image data to restore the raw image data; and the image acquisition card sending the raw image data to a host computer through a PCIe bus interface. This application reduces the data bandwidth required for image data transmission, lowers the transmission bandwidth demand for image data, and improves the efficiency of transmitting image data to the host computer.

### SUMMARY

According to an aspect of the present disclosure, a frame grabber is provided, including: at least one ethernet physical layer transceiver; a communication bus; an image processor, including at least one image processing subsystem, where each of the at least one image processing subsystem communicates with a camera through the at least one ethernet physical layer transceiver, and communicates with a computing device through the communication bus; and a memory, coupled to the image processor; where, for each of the at least one image processing subsystem, the image processing subsystem is configured to: acquire network data packets from the camera, the network data packets include image data packets obtained by the camera encapsulating an image frame in accordance with a predetermined image transmission protocol; decode the image data packets in accordance with the predetermined image transmission protocol to obtain the image frame; cache the image frame in the memory; and transmit the image frame stored in the memory to the computing device according to image processing efficiency of the computing device.

In some embodiments, before transmitting the image frame stored in the memory to the computing device, the image processing subsystem is further configured to: perform data processing on the image frame, where the data processing includes at least one of following processings: decompression, digital gain, Bayer interpolation, color correction, gamma correction, color space conversion, or sharpening.

In some embodiments, the image processor further includes: a communication bus subsystem, configured to communicate with the computing device through the communication bus; a scheduling unit, configured to receive data from the at least one image processing subsystem and send the received data to the communication bus subsystem, the communication bus subsystem sends the data received from the scheduling unit to the computing device through the communication bus; a processor, configured to perform configuration on a register of the at least one ethernet physical layer transceiver; and a register configuration unit, configured to perform configuration on a register of the at least one image processing subsystem according to a configuration instruction from the computing device.

In some embodiments, the network data packets further include: a control instruction data packet; the image processing subsystem includes: a streaming processing subsystem; a media access control unit, configured to receive a data stream from one of the at least one ethernet physical layer transceiver and generate the network data packets according to the data stream; a control instruction processing unit; a signal processing subsystem; a packet generation unit; and an arbiter unit, configured to: receive the network data packets from the media access control unit, send the image data packets in the network data packets to the streaming processing subsystem, and send the control instruction data packet in the network data packets to the control instruction processing unit; where, the streaming processing subsystem is configured to decode the image data packets in the network data packets to generate the image frame, and store the image frame in the memory of the frame grabber; the control instruction processing unit is configured to send the control instruction data packet in the network data packets to the computing device; the streaming processing subsystem is further configured to acquire the image frame from the memory, and transmit the image frame to the ISP subsystem; the signal processing subsystem is configured to send the image frame to the packet generation unit; and the packet generation unit is configured to convert the image frame into a transmission data packet conforming to a communication bus transmission format, and transmit the transmission data packet to the computing device.

In some embodiments, the streaming processing subsystem includes: a decode unit, configured to decode the image data packets in the network data packets in accordance with the predetermined image transmission protocol to obtain the image frame; a memory management unit, configured to manage storage space of the memory of the frame grabber; an image direct memory access write unit, configured to acquire the image frame from the decode unit, apply for storage space in the memory from the memory management unit, and write the image frame in the applied storage space; an image direct memory access read unit, configured to acquire a storage address of the image frame stored in the memory from the memory management unit, and read the image frame according to the storage address; and an image transmitting unit, configured to acquire the image frame from the image direct memory access read unit, and transmit the image frame to the signal processing subsystem.

In some embodiments, the signal processing subsystem includes: a decompression unit; a bypass unit; an analysis unit, configured to analyze whether an image frame received from the streaming processing subsystem is a compressed image frame; in response to that the received image frame is a compressed image frame, transmit the compressed image frame to the decompression unit; and in response to that the received image frame is an uncompressed image frame, transmit the uncompressed image frame to the bypass unit; and a multiplexing unit, configured to acquire an image frame output by the decompression unit or an image frame output by the bypass unit, and transmit the acquired image frame to the packet generation unit.

In some embodiments, the signal processing subsystem includes: a decompression unit, configured to decode a compressed image frame received from the streaming processing subsystem into an uncompressed image frame; a bypass unit; a signal processing unit, configured to perform signal processing on an image frame, where the signal processing includes at least one of following processings: digital gain, Bayer interpolation, color correction, gamma correction, color space conversion, or sharpening; an analysis unit, configured to analyze whether an image frame received from the streaming processing subsystem is a compressed image frame; in response to that the received image frame is a compressed image frame, transmit the compressed image frame to the decompression unit; and in response to that the received image frame is an uncompressed image frame, transmit the uncompressed image frame to the bypass unit or the signal processing unit according to configuration information, where the configuration information is configured to specify the bypass unit or the signal processing unit; and a multiplexing unit, configured to acquire an image frame output by the decompression unit, an image frame output by the bypass unit, or an image frame output by the signal processing unit, and transmit the acquired image frame to the packet generation unit.

In some embodiments, the image processor further includes: a communication bus subsystem and a scheduling unit; where the image processing subsystem sends the image frame and the control instruction data packet to the scheduling unit; the scheduling unit is configured to transmit the image frame and the control instruction data packet from the image processing subsystem to the communication bus subsystem; the communication bus subsystem is configured to write the image frame and the control instruction data packet from the image processing subsystem in the memory of the computing device, and send, after acquiring a computer control instruction data packet from the computing device, the computer control instruction data packet to the scheduling unit; the scheduling unit is configured to send the computer control instruction data packet from the computing device to the control instruction processing unit of the image processing subsystem; and the control instruction processing unit is configured to send the computer control instruction data packet from the computing device to the camera through the media access control unit.

In some embodiments, the image processor further includes: a communication bus subsystem; the packet generation unit is further configured to send a first interruption instruction representing a request for transmission of the image frame to the computing device through the communication bus subsystem, so as to enable the computing device to return an image storage address in the computing device to the communication bus subsystem in response to the first interruption instruction; the packet generation unit is configured to transmit the image frame to the image storage address through the communication bus subsystem, and when completing transmission of the image frame, send a second interruption instruction representing completion of the transmission of the image frame to the computing device through the communication bus subsystem, so as to enable the computing device to process the image frame in response to the second interruption instruction; the control instruction processing unit is configured to send a third interruption instruction representing a request for transmission of a control instruction data packet to the computing device through the communication bus subsystem, so as to enable the computing device to return a instruction storage address in the computing device to the communication bus subsystem in response to the third interruption instruction; and the control instruction processing unit is configured to transmit the control instruction data packet to the instruction storage address through the communication bus subsystem, and when transmission of the control instruction data packet is completed, send a fourth interruption instruction representing completion of the transmission of the control instruction data packet to the computing device through the communication bus subsystem, so as to enable the computing device to process the control instruction data packet in response to the fourth interruption instruction.

In some embodiments, the communication bus subsystem is further configured to acquire a write instruction for a register in the image processing subsystem from the computing device, and send the write instruction to a register configuration unit of the image processing subsystem; the register configuration unit in the image processing subsystem is configured to perform configuration on the register in the image processing subsystem according to the write instruction; and the communication bus subsystem is further configured to acquire the a status parameter of the register in the image processing subsystem from the register configuration unit in the image processing subsystem, and send the status parameter to the computing device.

In some embodiments, the scheduling unit includes: a scheduling write unit and a scheduling read unit; and the communication bus subsystem includes: a bus controller, a peripheral component interconnect express (PCIe) direct memory access write unit, a PCIe direct memory access read unit, a register write unit, and a register read unit; where, the scheduling write unit is configured to transmit the image frame and the control instruction data packet from the image processing subsystem to the PCIe direct memory access write unit of the communication bus subsystem; and the bus controller is configured to perform one of following operations: instructing the PCIe direct memory access write unit to write the image frame and the control instruction data packet from the image processing subsystem in the memory of the computing device; instructing the PCIe direct memory access read unit to send the computer control instruction data packet to the scheduling read unit of the scheduling unit after acquiring the computer control instruction data packet from the computing device; instructing the register write unit to acquire a write instruction for a register in the image processing subsystem from the computing device, and send the write instruction to a register configuration unit of the image processing subsystem, so as to enable the register configuration unit to perform configuration on the register in the image processing subsystem according to the write instruction; or instructing the register read unit to acquire a status parameter of the register in the image processing subsystem from the register configuration unit, and send the status parameter to the computing device; where, the scheduling read unit is configured to send the computer control instruction data packet from the computing device to the control instruction processing unit.

According to an aspect of the present disclosure, an image capture method is provided, applied to a frame grabber, including: acquiring network data packets from a camera, where the network data packets include image data packets obtained by the camera encapsulating an image frame in accordance with a predetermined image transmission protocol; decoding the image data packets in accordance with the predetermined image transmission protocol to obtain the image frame; caching the image frame in a memory of the frame grabber; and transmitting the image frame stored in the memory to a computing device according to image processing efficiency of the computing device.

In some embodiments, transmitting the image frame stored in the memory to the computing device according to image processing efficiency of the computing device includes: sending a first interruption instruction representing a request for transmission of the image frame to the computing device, so as to enable the computing device to return an image storage address in the computing device in response to the first interruption instruction; and transmitting the image frame to the image storage address, and when the transmission of the image frame is completed, sending a second interruption instruction representing completion of the transmission of the image frame to the computing device, so as to enable the computing device to process the image frame in response to the second interruption instruction.

According to an aspect of the present disclosure, an image capture system is provided, including: at least one camera; the frame grabber according to embodiments of the present disclosure; and a computing device.

In summary, the frame grabber according to embodiments of the present disclosure can replace some processing operations of a processor in a computing device, for example, decoding image data packets and caching image frames for a plurality of cameras in place of the processor in the computing device. The frame grabber in embodiments of the present disclosure can replace a processor of a computing device to decode image data packets, thereby saving computing resources in the computing device. In addition, the frame grabber in embodiments of the present disclosure, by decoding image data packets and caching image frames for a plurality of cameras, helps solve the problem of data overflow loss caused by fluctuations in the processing speed of computing devices. In addition, the frame grabber in embodiments of the present disclosure can transmit image frames stored in the memory of the frame grabber to the computing device according to the image processing efficiency of the computing device, such that the amount of data transmitted to the computing device is consistent with the processing capability of the computing device, so as to reduce or avoid the situation where the image frames sent by the frame grabber exceed the processing capability of the computing device, thereby reducing or avoiding the situation of data overflow loss of the computing device.

### BRIEF DESCRIPTION OF DRAWINGS

FIG. 1A to FIG. 1B show schematic diagrams of an image capture system according to some embodiments.
FIG. 2 shows a schematic diagram of a frame grabber according to some embodiments of the present disclosure.
FIG. 3 shows a flowchart of an image capture method of an image capture system according to some embodiments of the present disclosure.
FIG. 4 shows a schematic diagram of an image processor according to some embodiments of the present disclosure.
FIG. 5 shows a schematic diagram of an image processing subsystem according to some embodiments of the present disclosure.
FIG. 6 shows a schematic diagram of a streaming processing subsystem according to some embodiments of the present disclosure.
FIG. 7 shows a schematic diagram of a signal processing subsystem according to some embodiments of the present disclosure.
FIG. 8 shows a schematic diagram of a signal processing subsystem according to some embodiments of the present disclosure.
FIG. 9 shows a schematic diagram of a signal processing unit according to some embodiments of the present disclosure.
FIG. 10 shows a schematic diagram of a scheduling unit and a communication bus subsystem according to some embodiments of the present disclosure.
FIG. 11 shows a flowchart of an image capture method according to some embodiments of the present disclosure.
FIG. 12 shows a flowchart of a method for sending an image frame to a computing device by a frame grabber according to some embodiments of the present disclosure.

### DETAILED DESCRIPTION

To make the objectives, technical solutions, and advantages of the present disclosure clearer, the following further describes the present disclosure in detail with reference to the accompanying drawings and embodiments.

In general, the cache capacities of the network card and switch of the industrial control computer are low, and when the processor of the industrial control computer cannot process the received network data packets in time, it will lead to the cache overflow of the network card, packet loss, and an incomplete image. Briefly, in the face of image capture scenarios with high data volume, current image capture solutions are prone to problems of data overflow and data loss.

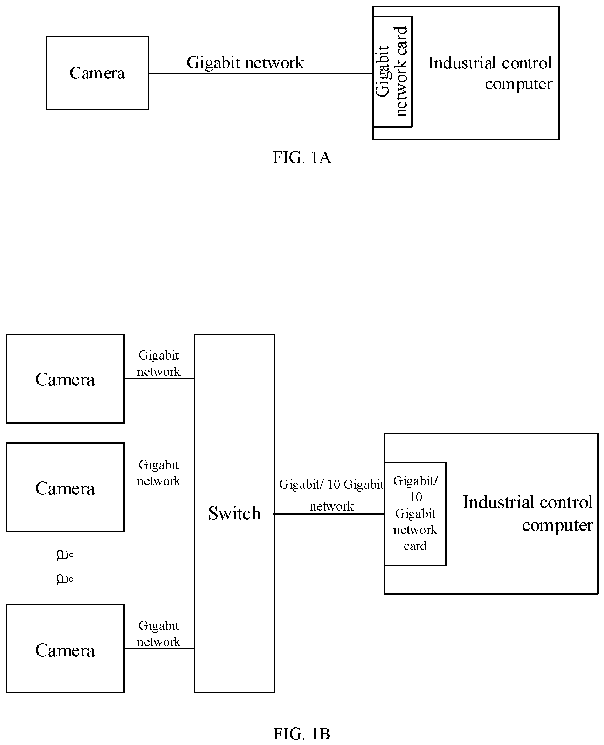

FIG. 1A shows a schematic diagram of an image capture system according to some embodiments. FIG. 1B shows a schematic diagram of an image capture system according to some embodiments. In the scenario illustrated in FIG. 1A, the image capture system may include a camera and an industrial control computer. The industrial control computer communicates with the single camera through a network card and receives image data captured by the camera. In the scenario illustrated in FIG. 1B, the image capture system may include a switch, an industrial control computer, and a plurality of cameras.

Here, the camera may, for example, perform image transmission based on the GigE Vision protocol. The GigE Vision is a standard for image transmission based on Gigabit Ethernet, specified by the Automated Imaging Association (AIA) and suitable for industrial imaging applications. The GigE Vision protocol includes a control protocol, the GigE Vision Control Protocol (GVCP), and an image streaming protocol, the GigE Vision Streaming Protocol (GVSP). Based on the GigE Vision protocol, the camera may split a single image frame into network data packets, e.g., each of 9 KB in size, and implement image transmission on a hardware architecture based on Gigabit Ethernet with a maximum transmission rate of 1 Gb/s. In addition, the camera may perform lossless compression on the image frame before transmitting the image frame. The industrial control computer receives network data packets through a network card of Gigabit or 10 Gigabit, and decodes the discrete network data packets through a processor, and reconstitutes the image frame, so as to implement complete reception of the image.

Due to the limited cache capacities of the network card and switch of the industrial control computer, once the processor of the industrial control computer cannot process the received network data packets in time, it will lead to the cache overflow of the network card of the industrial control computer, packet loss, and an incomplete image. Briefly, in the face of image capture scenarios with high data volume, the image capture systems illustrated in FIG. 1A and FIG. 1B are prone to problems of data overflow and data loss.

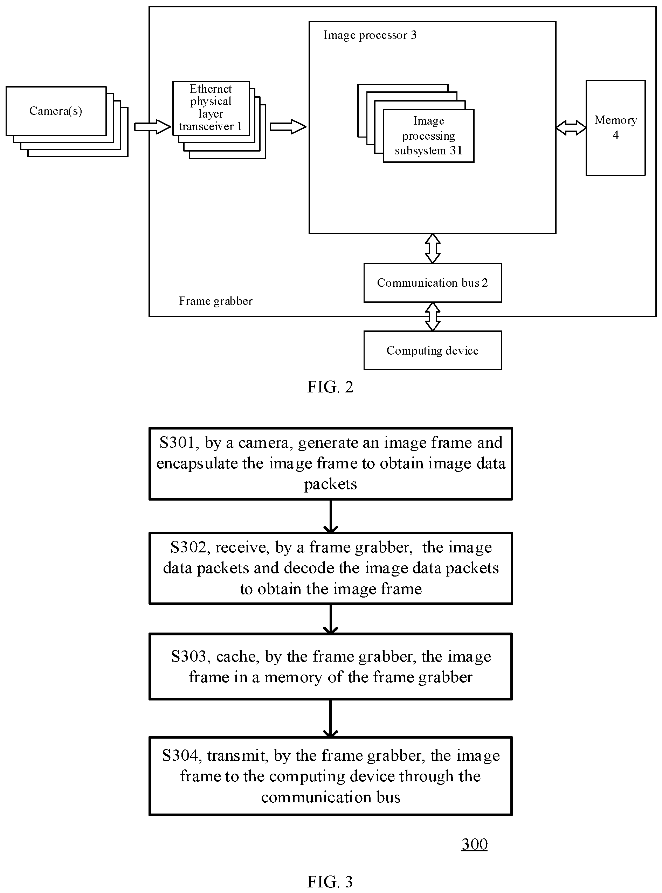

The present disclosure provides a frame grabber, and uses the frame grabber to replace the network card and switch in the image capture systems, which helps to solve the problem of data overflow and data loss. The frame grabber in embodiments of the present disclosure will be described below with reference to FIG. 2.

FIG. 2 shows a schematic diagram of a frame grabber according to some embodiments of the present disclosure.

As illustrated in FIG. 2, the frame grabber includes: at least one Ethernet Physical Layer (PHY) transceiver 1, a communication bus 2, an image processor 3, and a memory 4. The image processor 3 includes at least one image processing subsystem. For example, FIG. 2 illustrates four image processing subsystems 31.

Each image processing subsystem 31 communicates with a camera through an ethernet physical layer transceiver, and communicates with a computing device through the communication bus 2

In some embodiments, each image processing subsystem 31 is configured with one ethernet physical layer transceiver 1 and communicates with one camera. The image processing subsystems 31 and the ethernet physical layer transceivers 1 are in a one-to-one correspondence. Each image processing subsystem 31 communicates with one camera through one ethernet physical layer transceiver 1, and communicates with a computing device through the communication bus 2. In this way, the frame grabber in embodiments of the present disclosure may process multipath image frames in parallel, thereby improving the data processing efficiency of processing multipath image frames. The computing device is, for example, an industrial control computer. The image processor 3 may be implemented, for example, based on a field programmable gate array (FPGA) processor. The image processor may be also implemented by a logic gate, a switch, an application specific integrated circuit (ASIC), or a digital signal processor (DSP), etc. The communication bus 2 is, for example, a communication interface such as PCI-Express.

The memory 4 is coupled to the image processor 3. The memory 4 is, for example, a high-speed random access memory, such as a dynamic random access memory (DRAM), a static random access memory (SRAM), a double data rate synchronous dynamic random access memory (DDR SDRAM), etc. Each image processing subsystem 31 is configured to acquire network data packets from the camera. Here, the camera may, for example, transmit network data packets based on User Datagram Protocol (UDP). The network data packets may include image data packets obtained by the camera encapsulating, in accordance with a predetermined image transmission protocol, an image frame captured by the camera. Here, the predetermined image transmission protocol is, for example, the GigE Vision protocol. The image data packet is, for example, a GVSP packet.

The image processing subsystem 31 decodes the image data packets in accordance with the predetermined image transmission protocol to obtain the image frame. The image processing subsystem 31 caches the image frame in the memory 4 of the frame grabber. The image processing subsystem 31 transmits the image frame stored in the memory 4 to a computing device according to image processing efficiency of the computing device. In other words, the data transmission volume of the image frames sent by the image processing subsystem 31 of the frame grabber to the computing device matches the processing capability of the computing device, so as to reduce the situation where the image frames sent by the frame grabber exceed the processing capabilities of the computing device, which can reduce data overflow and data loss in the computing device.

In summary, the frame grabber according to embodiments of the present disclosure, different from network card, can replace some processing operations of a processor in a computing device, for example, decoding image data packets and caching image frames for a plurality of cameras in place of the processor in the computing device. The frame grabber in embodiments of the present disclosure can replace the processor of the computing device to decode image data packets, thereby saving computing resources in the computing device. In addition, the frame grabber in embodiments of the present disclosure, by decoding image data packets and caching image frames for a plurality of cameras, helps solve the problem of data overflow loss caused by fluctuations in the processing speed of computing devices. In addition, the frame grabber in embodiments of the present disclosure can transmit image frames stored in the memory of the frame grabber to the computing device according to the image processing efficiency of the computing device, such that the amount of data transmitted to the computing device is consistent with the processing capability of the computing device, so as to reduce or avoid the situation where the image frames sent by the frame grabber exceed the processing capability of the computing device, thereby reducing or avoiding the situation of data overflow loss of the computing device.

In some embodiments, each image processing subsystem 31 is also configured to perform data processing on an image frame. The data processing includes at least one of decompression or image signal processing. Here, decompression is, for example, decoding a compressed image frame into an uncompressed image frame. Image signal processing may, for example, include at least one of following processings: digital gain, Bayer interpolation, color correction, gamma correction, color space conversion, or sharpening, etc. In this way, the frame grabber can perform data processing on images, which can save computing resources of the computing device and increase the rate at which the computing device processes images, and then increase the rate of transmitting images to the computing device.

FIG. 3 shows a flowchart of an image capture method 300 of an image capture system according to some embodiments of the present disclosure.

As illustrated in FIG. 3, the image capture method includes steps S301 to S304. At step S301, an image frame is generated and encapsulated by a camera to obtain image data packets. Here, after the camera generates an image frame, packet encapsulation may be performed on the image frame in accordance with a predetermined image transmission protocol such as GigE Vision. For example, the camera divides an image frame into three types of User Datagram Protocol (UDP) packets, a leader packet, a payload packet, and a trailer packet, in accordance with the GigE Vision protocol. A leader packet contains image start information and image format information, a trailer packet contains image end information, and a payload packet is image payload. The UDP data packets corresponding to an image frame may include a leader packet, a plurality of payload packets, and a trailer packet.

At step S302, the image data packets are received and decoded by a frame grabber to obtain the image frame. For example, the frame grabber may perform decoding in accordance with the GigE Vision protocol

At step S303, the image frame is cached in a memory of the frame grabber by the frame grabber.

In some embodiments, before transmitting the image frame to the computing device, the frame grabber may perform data processing on the image frame. Image processing includes, for example, at least one of following processings: digital gain, Bayer interpolation, color correction, gamma correction, color space conversion, or sharpening. For example, if the image frame cached in the memory of the frame grabber is a lossless compressed image frame, the frame grabber may perform decompression on the image frame. If the image frame cached in the memory of the frame grabber has not been compressed, the frame grabber does not need to perform decompression processing. In addition, the frame grabber may also perform image signal processing on image frames, such as digital gain, Bayer interpolation, color correction, gamma correction, color space conversion or sharpening processing, etc.

At step S304, the image frame is transmitted by the frame grabber to the computing device through the communication bus. Here, the frame grabber may transmit the image frame stored in the memory of the frame grabber to the computing device according to image processing efficiency of the computing device. In other words, the transfer rate from the frame grabber to the computing device depends on how efficiently the computing device processes images.

In summary, according to the image capture method 300 according to embodiments of the present disclosure, the frame grabber can be used to replace a processor in a computing device to perform decoding, data processing, and image frame caching on image data packets for a plurality of cameras. The image capture method 300 in embodiments of the present disclosure can avoid the processor of the computing device from decoding and data processing the image data packets, thereby saving computing resources in the computing device. In addition, the image capture method 300 in embodiments of the present disclosure, by decoding image data packets and caching image frames for a plurality of cameras, helps solve the problem of data overflow loss caused by fluctuations in the processing speed of computing devices.

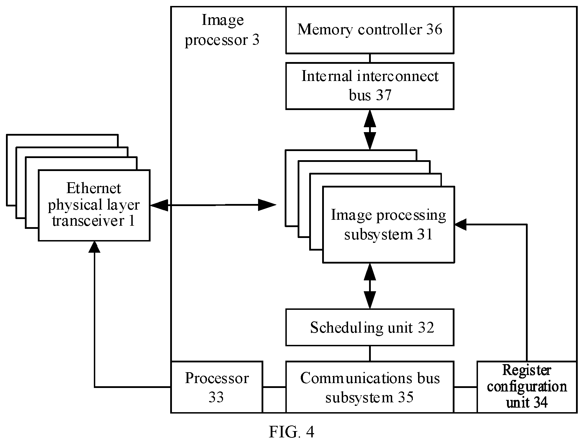

FIG. 4 is a schematic diagram of an image processor according to some embodiments of the present disclosure.

As illustrated in FIG. 4, the image processor 3 of the frame grabber further includes: a scheduling unit (such as scheduler) 32, a processor 33, a register configuration unit 34, and a communication bus subsystem 35.

The processor 33 may be, for example, a soft central processing unit implemented through FPGA, or may be a central processing unit (CPU) or a microprocessor, e.g., a microcontroller unit (MCU). The processor 33 is configured to perform configuration on the register of the ethernet physical layer transceiver 1. It should be noted that, since the image processor 3 of the frame grabber may perform configuration on the register of the ethernet physical layer transceiver 1 through the processor 33, the image processor 3 of the frame grabber in embodiments of the present disclosure may, after being powered on, perform configuration on the register of the ethernet physical layer transceiver 1, and does not need to wait for the computing device to perform configuration on the ethernet physical layer transceiver 1 after the computing device is started, such that the ethernet physical layer transceiver 1 can enter the working state faster, and frame grabber can start receiving data from the camera faster.

The register configuration unit 34 is configured to perform configuration on a register (not illustrated in FIG. 4) of the image processing subsystem 31 according to a configuration instruction from the computing device.

The communication bus subsystem 35 is configured to communicate with the computing device through the communication bus 2 of the frame grabber. The scheduling unit 32 is coupled to the communication bus subsystem 35. Each image processing subsystem 31 in the image processor 3 may directly send the data to be sent to the computing device to the scheduling unit 32. The scheduling unit 32 may receive data from the image processing subsystem 31 and send the data to the communication bus subsystem 35. The communication bus subsystem 35 sends data to the computing device through the communication bus 2 of the frame grabber. Briefly, the image processing subsystems 31 in the image processor 3 share the communication bus 2 of the frame grabber through the scheduling unit 32 and the communication bus subsystem 35.

In some embodiments, the image processor 3 further includes a memory controller 36 and an internal interconnect bus 37. The memory controller 36 is, for example, a double data rate (DDR) controller. The internal interconnect bus 37 is, for example, an FPGA internal interconnect bus. The image processing subsystem 31 in the frame grabber may be connected to the memory controller 36 through the internal interconnect bus 37. In this way, the image processing subsystem 31 may use the memory controller 36 to store image frame in the memory 4 of the frame grabber.

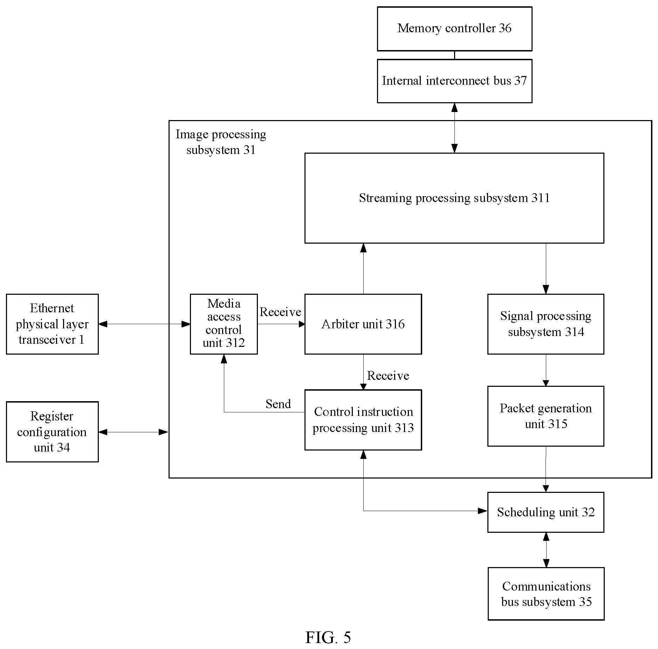

FIG. 5 shows a schematic diagram of an image processing subsystem according to some embodiments of the present disclosure.

A network data packet may include a control instruction data packet in addition to an image data packet. In other words, one network data packet may be an image data packet or a control instruction data packet. Here, the control instruction data packet is, for example, a GVCP data packet.

As illustrated in FIG. 5, each image processing subsystem 31 includes: a streaming processing subsystem (such as GVSP subsystem) 311, a media access control unit (may also be referred to as MAC unit) 312, a control instruction processing unit (such as GVCP process unit) 313, a signal processing subsystem (may also be referred to as ISP subsystem) 314, a packet generation unit 315, and an arbiter unit (such as MAC arbiter unit) 316.

The media access control unit 312 is configured to receive a data stream of the ethernet physical layer transceiver and generate network data packets according to the data stream. For example, the media access control unit 312 may generate two types of network data packet, i.e., a GVCP data packet and a GVSP data packet.

The arbiter unit 316 is configured to receive network data packets from the media access control unit 312, and analyze the types of network data packets. The Arbiter unit 316 is configured to send the image data packets in the network data packets to the streaming processing subsystem 311, and send the control instruction data packets in the network data packets to the control instruction processing unit 313; Here, the control instruction data packet may involve, for example, a status parameter of a camera, a configuration parameter of a camera, etc. In other words, the arbiter unit 316 may separate the GVSP data packets from the GVCP data packets.

The streaming processing subsystem 311 is configured to decode the image data packets to generate the image frame, and store the image frame in the memory 4 of the frame grabber.

The control instruction processing unit 313 is configured to send the control instruction data packets to the computing device. In addition, the control instruction processing unit 313 may also receive control instruction data packets from the computing device, and send control instruction data packets to the camera through the media access control unit 312.

The streaming processing subsystem 311 is further configured to acquire the image frame from the memory of the frame grabber, and transmit the image frame to the signal processing subsystem 314.

The signal processing subsystem 314 is configured to send the uncompressed image frame to the packet generation unit 315. Here, the signal processing subsystem 314 implements the lossless decompression function of the images in a hardware manner. Here, since the signal processing subsystem 314 is able to implement the lossless decompression function, the data volume of the images that can be received by the frame grabber becomes larger, and the data volume of the images sent to the computing device also becomes larger. In this way, the frame grabber can, through the signal processing subsystem 314, increase the image transmission bandwidth and enable the decompression process not to occupy any processor resources in the computing device.

The packet generation unit 315 is configured to convert the image frame into transmission data packets conforming to a communication bus transmission format, and transmit the transmission data packets to the computing device through the communication bus 2 of the frame grabber. For example, the data volume of a transmission data packet conforming to the communication bus transmission format does not exceed a data volume threshold. The image frames acquired by the camera may have different data volume. The packet generation unit 315 may split image frames with different data volumes uniformly into transmission data packets that do not exceed a data volume threshold, such that the communication bus 2 of the frame grabber correctly transmits data.

In some embodiments, the packet generation unit 315 sends the first interruption instruction representing a request for transmission of the image frame to the computing device through the communication bus subsystem 35 of the image processor 3, such that the computing device returns an image storage address in the computing device to the communication bus subsystem 35 in response to the first interruption instruction. Here, the image storage address is, for example, the start address in the memory of the computing device used to store the image frame. On this basis, the packet generation unit 315 may send the image frame to the computing device through the scheduling unit 32, the communication bus subsystem 35, and the communication bus 2.

The packet generation unit 315 transmits the image frame to the image storage address of the computing device through the communication bus subsystem 35, and when the transmission of the image frame is completed, sends the second interruption instruction representing completion of the transmission of the image frame to the computing device through the communication bus subsystem 35, such that the computing device processes the image frame in response to the second interruption instruction. In this way, the frame grabber can, by sending an interrupt instruction to the computing device, suspend sending a new image frame to the computing device before the computing device processes the image frame, and may send a new image frame to the computing device after the computing device processes the image frame. In other words, the frame grabber can, by sending an interrupt instruction to the computing device, send image frames to the computing device according to the processing efficiency of the computing device, so as to enable the data transmission volume of the image frames sent by the frame grabber to the computing device to match the processing capability of the computing device, which avoids the situation where the image frames sent by the frame grabber exceed the processing capabilities of the computing device, and can avoid data overflow and data loss in the computing device.

In some embodiments, the control instruction processing unit 313 sends the third interruption instruction representing a request for transmission of a control instruction data packet to the computing device through the communication bus subsystem 35, such that the computing device returns an instruction storage address in the computing device to the communication bus subsystem 35 in response to the third interruption instruction.

The control instruction processing unit 313 transmits the control instruction data packet to the instruction storage address in the computing device through the communication bus subsystem 35, and when the transmission of the control instruction data packet is completed, sends the fourth interruption instruction representing completion of the transmission of the control instruction data packet to the computing device through the communication bus subsystem 35, such that the computing device processes the control instruction data packet in response to the fourth interruption instruction. In this way, the control instruction data packet transmitted by the camera to the computing device may reach the computing device through the frame grabber.

In summary, the frame grabber can send an interrupt instruction to the computing device and then wait for the computing device to respond to the interrupt instruction, thereby achieving the match between the data transmission rate of the frame grabber and the processing efficiency of the computing device. That is, it is implemented that the image frames and control instruction data packets stored in the memory of the frame grabber are transmitted to the computing device according to the processing efficiency of the computing device for the images and control instruction data packets from the camera.

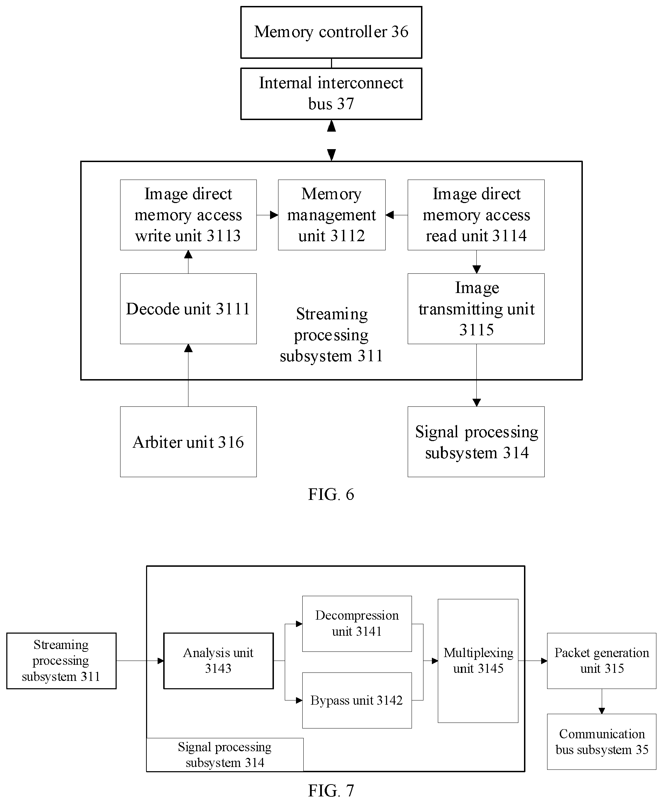

FIG. 6 shows a schematic diagram of a streaming processing subsystem 311 according to some embodiments of the present disclosure.

As illustrated in FIG. 6, the streaming processing subsystem 311 includes: a decode unit 3111, a memory management unit (MMU) 3112, an image direct memory access write unit 3113, an image direct memory access read unit 3114, and image transmitting unit (Image Transmit Unit) 3115.

The decode unit 3111 is configured to decode the image data packets in accordance with a predetermined image transmission protocol to obtain the image frame.

The memory management unit 3112 is configured to manage storage space of the memory 4. In addition, the memory management unit 3112 may also detect the integrity of image frames and handle various incomplete image situations such as packet loss, frame loss, bad frame, etc. For example, the memory management unit 3112 may delete incomplete image frames.

The image direct memory access write unit 3113 is configured to acquire the image frame from the decode unit 3111, apply for storage space in the memory 4 from the memory management unit 3112, and write the image frame in the applied storage space. The image direct memory access write unit 3113 writes image frames in the memory 4, for example, in a direct memory access (DMA) manner.

The image direct memory read unit 3114 is configured to acquire a storage address of the image frame stored in the memory 4 from the memory management unit 3112, and read the image frame according to the storage address.

The image transmitting unit 3115 is configured to acquire the image frame from the image direct memory read unit 3114 and transmit the image frame to the signal processing subsystem 314.

FIG. 7 shows a schematic diagram of a signal processing subsystem 314 according to some embodiments of the present disclosure.

As illustrated in FIG. 7, the signal processing subsystem 314 includes: a decompression unit 3141, a bypass unit 3142, an analysis unit 3143 and a multiplexing unit 3145.

The analysis unit 3143 is configured to analyze whether the image frame received from the steaming processing subsystem 311 is a compressed image frame. When the received image frame is a compressed image frame, the analysis unit 3143 transmits the compressed image frame to the decompression unit 3141. When the received image frame is an uncompressed image frame, the analysis unit 3143 transmits the uncompressed image frame to the bypass unit 3142. The bypass unit 3142 does not process the received image frame.

The multiplexing unit 3145 is configured to acquire an image frame output by the decompression unit 3141 and/or an image frame output by the bypass unit 3142, and transmit the acquired image frame to the packet generation unit 315.

In summary, the signal processing subsystem 314 may decompress an image frame in a compressed format, so as to enable the frame grabber to replace the computing device for decompression.

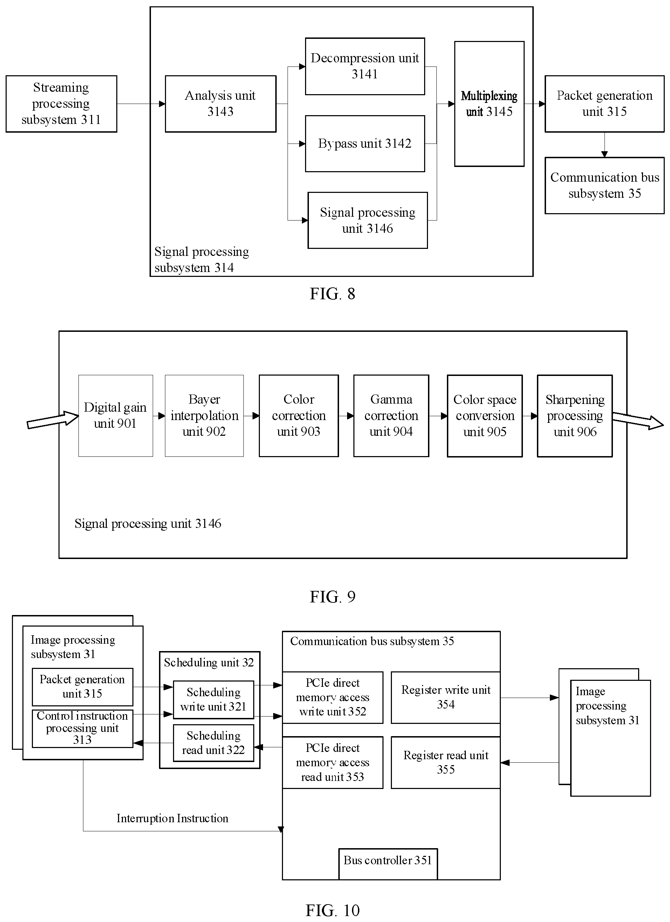

FIG. 8 shows a schematic diagram of a signal processing subsystem 314 according to some embodiments of the present disclosure.

As illustrated in FIG. 8, the signal processing subsystem 314 includes: a decompression unit 3141, a bypass unit 3142, an analysis unit 3143, a multiplexing unit 3145, and a signal processing unit 3146.

The decompression unit 3141 is configured to decode a compressed image frame into an uncompressed image frame.

The signal processing unit 3146 is configured to perform image signal processing on an image frame. Image signal processing may, for example, include at least one of following processings: digital gain, Bayer interpolation, color correction, gamma correction, color space conversion, and sharpening. In some embodiments, the signal processing unit 3146 has, for example, the structure illustrated in FIG. 9. As illustrated in FIG. 9, the signal processing unit 3146 may include: a digital gain unit 901, a Bayer interpolation unit 902, a color correction unit 903, a gamma correction unit 904, a color space conversion unit 905, and a sharpening processing unit 906. These units perform digital gain, Bayer interpolation, color correction, gamma correction, color space conversion or sharpening on the image frame.

The analysis unit 3143 is configured to analyze whether the received image frame is a compressed image frame, in response to that the image frame is a compressed image frame, transmit the compressed image frame to the decompression unit 3141; in response to that the received image frame is an uncompressed image frame, the analysis unit 3143 is configured to transmit the uncompressed image frame to the bypass unit 3142 or the signal processing unit 3146 according to the configuration information Here, the configuration information is configured to specify that the uncompressed image frame is transmitted to the bypass unit 3142 or the signal processing unit 3146. For example, the computing device may send configuration information for the signal processing unit 3146 via the communication bus subsystem 35 through the communication bus 2 to the register configuration unit 34 of the image processor 3. The register configuration unit 34 may configure the register of the signal processing subsystem 314 according to the configuration information. In this way, the analysis unit 3143 will send the uncompressed image frame to the bypass unit 3142 (or the signal processing unit 3146) according to the configuration information.

The multiplexing unit 3145 is configured to acquire an image frame output by the decompression unit 3141, an image frame output by the bypass unit 3142, and/or an image frame output by the signal processing unit 3146, and transmit the acquired image frame to the packet generation unit 315.

In summary, the signal processing subsystem 314 can perform, for example, decompression or image signal processing operations on the image frame, thereby saving computing consumption of the computing device.

In some embodiments, each image processing subsystem 31may send an image frame and a control instruction data packet to the scheduling unit 32 of the image processor 3.

The scheduling unit 32 sequentially transmits the image frame and control instruction data packet of each image processing subsystem 31 to the communication bus subsystem 35.

For example, as illustrated in FIG. 10, the communication bus subsystem 35 controls the communication bus 2 through the communication bus controller 351 in the communication bus subsystem 35, and writes the image frame and control instruction data packet from each image processing subsystem 31 in the memory of the computing device.

After acquiring the control instruction data packet from the computing device, the communication bus subsystem 35 sends the control instruction data packet to the scheduling unit 32.

The scheduling unit 32 sends the control instruction data packet from the computing device to the control instruction processing unit 313 of the image processing subsystem 31.

The control instruction processing unit 313 sends the control instruction data packet from the computing device to the camera through the media access control unit 312 of the image processing subsystem 31.

In some embodiments, the communication bus subsystem 35 is further configured to acquire a write instruction for the register in the image processing subsystem 31 from the computing device, and send the write instruction to the register configuration unit 34 of the image processing subsystem 31. In this way, the register configuration unit 34 may perform configuration on the register in the image processing subsystem 31 according to the write instruction. The communication bus subsystem 35 is further configured to acquire the status parameters of the register of the image processing subsystem 31 from the register configuration unit 34, and send the status parameters to the computing device. In this way, the computing device may acquire the status parameters of the register of the image processing subsystem 31, and may re-perform parameter configuration for the status parameters based on the acquired status parameters. The computing device may instruct the image processing subsystem 31 to perform configuration on the register by sending a write instruction related to parameter configuration to the image processing subsystem 31.

FIG. 10 shows a schematic diagram of a scheduling unit 32 and a communication bus subsystem 35 according to some embodiments of the present disclosure.

As illustrated in FIG. 10, the scheduling unit 32 may include: a scheduling write unit 321 and a scheduling read unit 322.

The communication bus subsystem 35 includes: a bus controller 351, a peripheral component interconnect express (PCIe) direct memory access write unit 352, a peripheral component interconnect express (PCIe) direct memory access read unit 353, a register write unit 354, and a register read unit 355.

The scheduling write unit 321 is configured to transmit the image frame and control instruction data packet of each image processing subsystem 31 to the PCIe direct memory access write unit 352 of the communication bus subsystem 35, for example, the scheduling write unit 321 may, sequentially or in parallel, transmit the image frame and control instruction data packet of each image processing subsystem 31 to the PCIe direct memory access write unit 352.

The bus controller 351 is configured to instruct the PCIe direct memory access write unit 352 to write the image frame and control instruction data packet from each image processing subsystem 31 in the memory of the computing device

The bus controller 351 may be further configured to instruct PCIe direct memory access read unit 353 to send the control instruction data packet to the scheduling read unit 322 of the scheduling unit 32 after acquiring the control instruction data packet from the computing device.

The scheduling read unit 322 is configured to send the control instruction data packet from the computing device to the control instruction processing unit 313 of the image processing subsystem 31.

The bus controller 351 may be further configured to instruct the register write unit 314 to acquire a write instruction for the register in the image processing subsystem 31 from the computing device, and send the write instruction to the register configuration unit 34 of the image processing subsystem 31, such that the register configuration unit 34 of the image processing subsystem 31 perform configuration on the register in the image processing subsystem 31 according to the write instruction.

The bus controller 351 may be further configured to instruct the register read unit 355 to acquire the status parameters of the register of the image processing subsystem 31 from the register configuration unit 34 of the image processing subsystem 31, and send the status parameters to the computing device.

In summary, the scheduling unit 32 may enable different image processing subsystems 31 in the frame grabber to share the communication bus subsystem 35. The communication bus subsystem 35 may implement data communication between the frame grabber and the computing device.

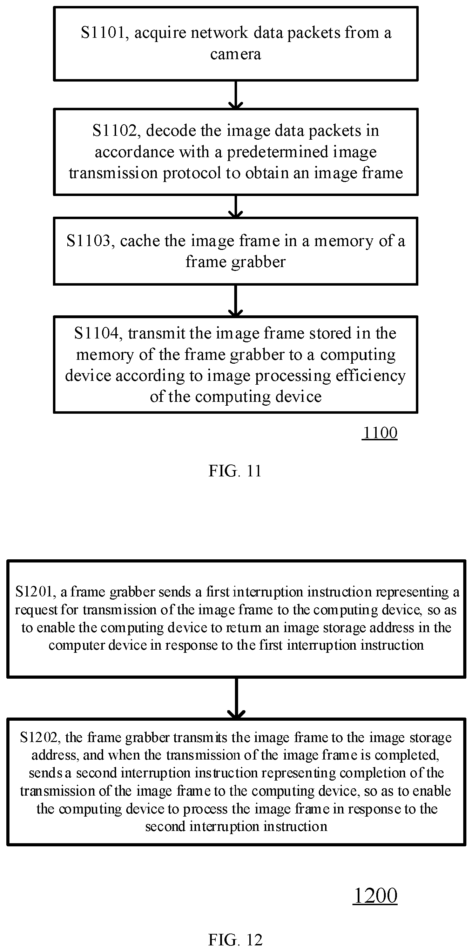

FIG. 11 shows a flowchart of an image capture method 1100 according to some embodiments of the present disclosure. The image capture method 1100 may, for example, be executed in a frame grabber, including steps S1101 to S1104.

As illustrated in FIG. 11, at step S1101, network data packets are acquired from a camera. The network data packets may include image data packets obtained by the camera encapsulating, in accordance with a predetermined image transmission protocol, an image frame captured by the camera.

At step S1102, the image data packets are decoded in accordance with the predetermined image transmission protocol to obtain the image frame.

At S1103, the image frame is cached in a memory of the frame grabber.

At S1104, the image frame stored in the memory of the frame grabber is transmitted to a computing device according to image processing efficiency of the computing device.

The image capture method according to embodiments of the present disclosure can be executed in a frame grabber. In this way, the frame grabber can replace some processing operations of the processor in the computing device, for example, decoding image data packets and caching image frames for a plurality of cameras in place of the processor in the computing device. The image capture method in embodiments of the present disclosure can avoid the processor of the computing device from decoding and data processing the image data packets, thereby saving computing resources in the computing device. In addition, the image capture method in embodiments of the present disclosure helps solve the problem of data overflow loss caused by fluctuations in the processing speed of computing devices by decoding image data packets and caching image frames for a plurality of cameras. In addition, the frame grabber in embodiments of the present disclosure can transmit image frames stored in the memory of the frame grabber to the computing device according to the image processing efficiency of the computing device, such that the data volume transmitted to the computing device matches the processing capability of the computing device, so as to reduce or avoid the situation where the image frames sent by the frame grabber exceed the processing capability of the computing device, which can reduce or avoid the situation of data overflow loss in the computing device.

In some embodiments, in the method 1100, before sending the image frame to the computing device, data processing may be also performed on the image frame, where the data processing includes at least one of following processings: decompression, digital gain, Bayer interpolation, color correction, gamma correction, color space conversion or sharpening. In this way, the method 1100 may replace the computing device to perform the aforementioned data processing, so as to save computing resources of the computing device and increase the rate at which the computing device receives image frames.

In some embodiments, step S1104 may be implemented as the method 1200, including steps S1201 to S1202.

As illustrated in FIG. 12, at step S1201, the frame grabber sends the first interruption instruction representing a request for transmission of the image frame to the computing device, so as to enable the computing device to return an image storage address in the computing device in response to the first interruption instruction. The image storage address is, for example, the start address in the memory of the computing device used to store the image frame.

At step S1202, the frame grabber transmits the image frame to the image storage address, and when the transmission of the image frame is completed, sends the second interruption instruction representing completion of the transmission of the image frame to the computing device, so as to enable the computing device to process the image frame in response to the second interruption instruction.

In summary, by sending an interrupt instruction to the computing device and waiting for the computing device to respond to the interrupt instruction, the method 1200 may realize matching the data transmission rate of the frame grabber with the processing efficiency of the computing device. The scope of protection is defined by the appended claims.

## Claims

1. A frame grabber, comprising:
at least one ethernet physical layer transceiver (1);
a communication bus (2);
an image processor (3), comprising a communication bus subsystem (35) and at least one image processing subsystem (31),
wherein each of the at least one image processing subsystem (31) is configured to communicate with a camera through the at least one ethernet physical layer transceiver, and communicate with a computing device through the communication bus (2); and
a memory (4), coupled to the image processor (3);
wherein for each of the at least one image processing subsystem (31), the image processing subsystem (31) is configured to:
acquire network data packets from the camera, the network data packets comprise image data packets obtained by the camera encapsulating an image frame in accordance with a predetermined image transmission protocol;
decode the image data packets in accordance with the predetermined image transmission protocol to obtain the image frame;
cache the image frame in the memory (4); and
transmit the image frame stored in the memory (4) to the computing device according to image processing capability of the computing device; wherein the image processing subsystem (31) comprises a packet generation unit (315), configured to: convert the image frame into
a transmission data packet conforming to a communication bus transmission format, and transmit the transmission data packet to the computing device, send a first interruption instruction representing a request for transmission of the image frame to the computing device through the communication bus subsystem (35), so as to enable the computing device to return an image storage address in the computing device to the communication bus subsystem (35) in response to the first interruption instruction; and
transmit the image frame to the image storage address through the communication bus subsystem (35), and when the transmission of the image frame is completed, send a second interruption instruction representing completion of the transmission of the image frame to the computing device through the communication bus subsystem (35), so as to enable the computing device to process the image frame in response to the second interruption instruction.

2. The frame grabber of claim 1, wherein, before transmitting the image frame stored in the memory (4) to the computing device, the image processing subsystem (31) is further configured to:
perform data processing on the image frame, wherein the data processing comprises at least one of following processings: decompression, digital gain, Bayer interpolation, color correction, gamma correction, color space conversion, or sharpening.

3. The frame grabber of claim 1, wherein the image processor (3) further comprises:
a communication bus subsystem (35), configured to communicate with the computing device through the communication bus (2);
a scheduling unit (32), configured to receive data from the at least one image processing subsystem (31) and send the received data to the communication bus subsystem (35), wherein the communication bus subsystem (35) is configured to send the data received from the scheduling unit (32) to the computing device through the communication bus (2);
a processor (33), configured to perform configuration on a register of the at least one ethernet physical layer transceiver (1); and
a register configuration unit (34), configured to perform configuration on a register of the at least one image processing subsystem (31) according to a configuration instruction from the computing device.

4. The frame grabber of claim 1, wherein the network data packets further comprise: a control instruction data packet;
the image processing subsystem (31) comprises:
a streaming processing subsystem (311);
a media access control unit (312), configured to receive a data stream from one of the at least one ethernet physical layer transceiver (1) and generate the network data packets according to the data stream;
a control instruction processing unit (313);
a signal processing subsystem (314);
a packet generation unit (315); and
an arbiter unit (316), configured to: receive the network data packets from the media access control unit (312), send the image data packets in the network data packets to the streaming processing subsystem (311), and send the control instruction data packet in the network data packets to the control instruction processing unit (313),
wherein the streaming processing subsystem (311) is configured to: decode the image data packets in the network data packets to generate the image frame, and store the image frame in the memory (4) of the frame grabber;
the control instruction processing unit (313) is configured to send the control instruction data packet in the network data packets to the computing device;
the streaming processing subsystem (311) is further configured to: acquire the image frame from the memory (4), and transmit the image frame to the signal processing subsystem (314);
the signal processing subsystem (314) is configured to send the image frame to the packet generation unit (315); and
the packet generation unit (315) is configured to: convert the image frame into a transmission data packet conforming to a communication bus transmission format,
and transmit the transmission data packet to the computing device.

5. The frame grabber of claim 4, wherein the streaming processing subsystem (311) comprises:
a decode unit (3111), configured to decode the image data packets in the network data packets in accordance with the predetermined image transmission protocol to obtain the image frame;
a memory management unit (3112), configured to manage storage space of the memory (4) of the frame grabber;
an image direct memory access write unit (3113), configured to: acquire the image frame from the decode unit (3111), apply for storage space in the memory (4) from the memory management unit (3112), and write the image frame in the applied storage space;
an image direct memory access read unit (3114), configured to: acquire a storage address of the image frame stored in the memory (4) from the memory management unit (3112), and read the image frame according to the storage address; and
an image transmitting unit (3115), configured to: acquire the image frame from the image direct memory access read unit (3114), and transmit the image frame to the signal processing subsystem (314).

6. The frame grabber of claim 4, wherein the signal processing subsystem (314) comprises:
a decompression unit (3141);
a bypass unit (3142);
an analysis unit (3143), configured to: analyze whether an image frame received from the streaming processing subsystem (311) is a compressed image frame, in response to that the received image frame is a compressed image frame, transmit the compressed image frame to the decompression unit (3141); and in response to that the received image frame is an uncompressed image frame, transmit the uncompressed image frame to the bypass unit (3142); and
a multiplexing unit (3145), configured to: acquire an image frame output by the decompression unit (3141) or an image frame output by the bypass unit (3142), and
transmit the acquired image frame to the packet generation unit (315).

7. The frame grabber of claim 4, wherein the signal processing subsystem (314) comprises:
a decompression unit (3141), configured to decode a compressed image frame received from the streaming processing subsystem (311) into an uncompressed image frame;
a bypass unit (3142);
a signal processing unit (3146), configured to perform signal processing on the image frame, wherein the signal processing comprises at least one of following processings:
digital gain, Bayer interpolation, color correction, gamma correction, color space conversion, or sharpening;
an analysis unit (3143), configured to: analyze whether an image frame received from the streaming processing subsystem (311) is a compressed image frame; in response to that the received image frame is a compressed image frame, transmit the compressed image frame to the decompression unit (3141); and in response to that the received image frame is an uncompressed image frame, transmit the uncompressed image frame to the bypass unit (3142) or the signal processing unit (3146) according to configuration information, wherein the configuration information is configured to specify the bypass unit (3142) or the signal processing unit (3146); and
a multiplexing unit (3145), configured to: acquire an image frame output by the decompression unit (3141), an image frame output by the bypass unit (3142), or an image frame output by the signal processing unit (3146), and transmit the acquired image frame to the packet generation unit (315).

8. The frame grabber of claim 4, wherein the image processor (3) further comprises: a communication bus subsystem (35) and a scheduling unit (32);
the image processing subsystem (31) is configured to send the image frame and the control instruction data packet to the scheduling unit (32);
the scheduling unit (32) is configured to transmit the image frame and the control instruction data packet from the image processing subsystem (31) to the communication bus subsystem (35);
the communication bus subsystem (35) is configured to: write the image frame and the control instruction data packet from the image processing subsystem (31) in a memory of the computing device, and send, after acquiring a computer control instruction data packet from the computing device, the computer control instruction data packet to the scheduling unit (32);
the scheduling unit (32) is configured to send the computer control instruction data packet from the computing device to the control instruction processing unit (313) of the image processing subsystem (31); and
the control instruction processing unit (313) is configured to send the computer control instruction data packet from the computing device to the camera through the media access control unit (312).

9. The frame grabber of claim 4, wherein the image processor (3) further comprises: a communication bus subsystem (35);
the packet generation unit (315) is further configured to send a first interruption instruction representing a request for transmission of the image frame to the computing device through the communication bus subsystem (35), so as to enable the computing device to return an image storage address in the computing device to the communication bus subsystem (35) in response to the first interruption instruction; the packet generation unit (315) is configured to transmit the image frame to the image storage address through the communication bus subsystem (35), and when the transmission of the image frame is completed, send a second interruption instruction representing completion of the transmission of the image frame to the computing device through the communication bus subsystem (35), so as to enable the computing device to process the image frame in response to the second interruption instruction; the control instruction processing unit (313) is configured to send a third interruption instruction representing a request for transmission of a control instruction data packet to the computing device through the communication bus subsystem (35), so as to enable the computing device to return an instruction storage address in the computing device to the communication bus subsystem (35) in response to the third interruption instruction; and
the control instruction processing unit (313) is configured to transmit the control instruction data packet to the instruction storage address through the communication bus subsystem (35), and when the transmission of the control instruction data packet is completed, send a fourth interruption instruction representing completion of the transmission of the control instruction data packet to the computing device through the communication bus subsystem (35), so as to enable the computing device to process the control instruction data packet in response to the fourth interruption instruction.

10. The frame grabber of claim 8, wherein the communication bus subsystem (35) is further configured to acquire a write instruction for a register in the image processing subsystem (31) from the computing device, and send the write instruction to a register configuration unit (34) of the image processing subsystem (31);
the register configuration unit (34) in the image processing subsystem (31) is configured to perform configuration on the register in the image processing subsystem (31) according to the write instruction; and
the communication bus subsystem (35) is further configured to acquire a status parameter of the register in the image processing subsystem (31) from the register configuration unit (34) in the image processing subsystem (31), and send the status parameter to the computing device.

11. The frame grabber of claim 8, wherein
the scheduling unit (32) comprises: a scheduling write unit (321) and a scheduling read unit (322); and
the communication bus subsystem (35) comprises: a bus controller (351), a peripheral component interconnect express, PCIe, direct memory access write unit (352), a PCIe direct memory access read unit (353), a register write unit (354), and a register read unit (355);
wherein the scheduling write unit (321) is configured to transmit the image frame and the control instruction data packet from the image processing subsystem (31) to the PCIe direct memory access write unit (352) of the communication bus subsystem (35); and
the bus controller (351) is configured to perform one of following operations:
instructing the PCIe direct memory access write unit (352) to write the image frame and the control instruction data packet from the image processing subsystem (31) in the memory of the computing device;
instructing the PCIe direct memory access read unit (353) to send, after acquiring the computer control instruction data packet from the computing device, the computer control instruction data packet to the scheduling read unit (322) of the scheduling unit (32);
instructing the register write unit (354) to acquire a write instruction for a register in the image processing subsystem (31) from the computing device, and send the write instruction to a register configuration unit (34) of the image processing subsystem (31), so as to enable the register configuration unit (34) to perform configuration on the register in the image processing subsystem (31) according to the write instruction; or
instructing the register read unit (355) to acquire a status parameter of the register in the image processing subsystem (31) from the register configuration unit (34), and
send the status parameter to the computing device;
wherein the scheduling read unit (322) is configured to send the computer control instruction data packet from the computing device to the control instruction processing unit (313).

12. An image capture method, applied to a frame grabber, comprising:
acquiring (S1101) network data packets from a camera, wherein the network data packets comprise image data packets obtained by the camera encapsulating an image frame in accordance with a predetermined image transmission protocol;
decoding (S1102) the image data packets in accordance with the predetermined image transmission protocol to obtain the image frame;
caching (S1103) the image frame in a memory of the frame grabber; and
transmitting (S1104) the image frame stored in the memory to a computing device according to image processing capability of the computing device;
**characterized in that** the transmitting (S1104) of the image frame stored in the memory to the computing device according to image processing capability of the computing device comprises:
converting the image frame into a transmission data packet conforming to a communication bus transmission format, and transmitting the transmission data packet to the computing device;
sending (S1201), through a communication bus subsystem, a first interruption instruction representing a request for transmission of the image frame to the computing device, so as to enable the computing device to return an image storage address in the computing device in response to the first interruption instruction; and
transmitting (S1202), through the communication bus subsystem, the image frame to the image storage address, and when the transmission of the image frame is completed, sending a second interruption instruction representing completion of the transmission of the image frame to the computing device, so as to enable the computing device to process the image frame in response to the second interruption instruction.

13. An image capture system, comprising:
at least one camera;
the frame grabber according to any one of claims 1-11; and
a computing device.

## Patentansprüche

1. Frame-Grabber, umfassend:
mindestens einen Ethernet-Transceiver (1) der physikalischen Schicht;
einen Kommunikationsbus (2);
einen Bildprozessor (3), umfassend ein Kommunikationsbus-Subsystem (35) und
mindestens ein Bildverarbeitungs-Subsystem (31), wobei jedes des mindestens einen Bildverarbeitungs-Subsystems (31) eingerichtet ist, mit einer Kamera durch den mindestens einen Ethernet-Transceiver der physikalischen Schicht zu kommunizieren und mit einer Rechenvorrichtung über den Kommunikationsbus (2) zu kommunizieren; und
einen Speicher (4), der mit dem Bildprozessor (3) gekoppelt ist;
wobei für jedes des mindestens einen Bildverarbeitungs-Subsystems (31) das Bildverarbeitungs-Subsystem (31) eingerichtet ist zum:
Erfassen von Netzwerkdatenpaketen von der Kamera, wobei die Netzwerkdatenpakete Bilddatenpakete umfassen, die durch die Kamera erhalten werden, die einen Bild-Frame gemäß einem vorbestimmten Bildübertragungsprotokoll einkapselt;
Decodieren der Bilddatenpakete gemäß dem vorbestimmten Bildübertragungsprotokoll, um den Bild-Frame zu erhalten;
Zwischenspeichern des Bild-Frames in dem Speicher (4); und
Übertragen des in dem Speicher (4) gespeicherten Bild-Frames an die Rechenvorrichtung gemäß der Bildverarbeitungsfähigkeit der Rechenvorrichtung;
wobei das Bildverarbeitungs-Subsystem (31) eine Paketerzeugungseinheit (315) umfasst, die eingerichtet ist zum:
Umwandeln des Bild-Frames in ein Übertragungsdatenpaket, das einem Kommunikationsbus-Übertragungsformat entspricht, und Übertragen des Übertragungsdatenpakets an die Rechenvorrichtung,
Senden einer ersten Unterbrechungsanweisung, die eine Anforderung zur Übertragung des Bild-Frames darstellt, an die Rechenvorrichtung durch das Kommunikationsbus-Subsystem (35), um es der Rechenvorrichtung zu ermöglichen, eine Bildspeicheradresse in der Rechenvorrichtung an das Kommunikationsbus-Subsystem (35) als Reaktion auf die erste Unterbrechungsanweisung zurückzugeben; und
Übertragen des Bild-Frames an die Bildspeicheradresse durch das Kommunikationsbus-Subsystem (35), und wenn die Übertragung des Bild-Frames abgeschlossen ist, Senden einer zweiten Unterbrechungsanweisung, die den Abschluss der Übertragung des Bild-Frames darstellt, an die Rechenvorrichtung durch das Kommunikationsbus-Subsystem (35), um es der Rechenvorrichtung zu ermöglichen, den Bild-Frame als Reaktion auf die zweite Unterbrechungsanweisung zu verarbeiten.

2. Frame-Grabber nach Anspruch 1, wobei das Bildverarbeitungs-Subsystem (31) vor dem Übertragen des in dem Speicher (4) gespeicherten Bild-Frames an die Rechenvorrichtung ferner eingerichtet ist zum:
Durchführen von Datenverarbeitung an dem Bild-Frame, wobei die Datenverarbeitung mindestens eine der folgenden Verarbeitungen umfasst:
Dekompression, digitale Verstärkung, Bayer-Interpolation, Farbkorrektur, Gammakorrektur, Farbraumumwandlung oder Schärfung.

3. Frame-Grabber nach Anspruch 1, wobei der Bildprozessor (3) ferner umfasst:
ein Kommunikationsbus-Subsystem (35), das eingerichtet ist, mit der Rechenvorrichtung über den Kommunikationsbus (2) zu kommunizieren;
eine Planungseinheit (32), die eingerichtet ist, Daten von dem mindestens einen Bildverarbeitungs-Subsystem (31) zu empfangen und die empfangenen Daten an das Kommunikationsbus-Subsystem (35) zu senden, wobei das Kommunikationsbus-Subsystem (35) eingerichtet ist, die von der Planungseinheit (32) empfangenen Daten über den Kommunikationsbus (2) an die Rechenvorrichtung zu senden;
einen Prozessor (33), der eingerichtet ist, eine Konfiguration an einem Register des mindestens einen Ethernet-Transceivers (1) der physikalischen Schicht durchzuführen; und
eine Registerkonfigurationseinheit (34), die eingerichtet ist, eine Konfiguration an einem Register des mindestens einen Bildverarbeitungs-Subsystems (31) gemäß einer Konfigurationsanweisung von der Rechenvorrichtung durchzuführen.

4. Frame-Grabber nach Anspruch 1, wobei die Netzwerkdatenpakete ferner umfassen:
ein Steueranweisungsdatenpaket;
das Bildverarbeitungs-Subsystem (31) umfasst:
ein Streaming-Verarbeitungs-Subsystem (311);
eine Medienzugriffssteuereinheit (312), die eingerichtet ist, einen Datenstrom von einem des mindestens einen Ethernet-Transceivers (1) der physikalischen Schicht zu empfangen und die Netzwerkdatenpakete gemäß dem Datenstrom zu erzeugen;
eine Steueranweisungsverarbeitungseinheit (313);
ein Signalverarbeitungs-Subsystem (314);
eine Paketerzeugungseinheit (315); und
eine Arbitrierungseinheit (316), die eingerichtet ist zum: Empfangen der Netzwerkdatenpakete von der Medienzugriffssteuereinheit (312), Senden der Bilddatenpakete in den Netzwerkdatenpaketen an das Streaming-Verarbeitungs-Subsystem (311) und Senden des Steueranweisungsdatenpakets in den Netzwerkdatenpaketen an die Steueranweisungsverarbeitungseinheit (313),
wobei das Streaming-Verarbeitungs-Subsystem (311) eingerichtet ist zum: Decodieren der Bilddatenpakete in den Netzwerkdatenpaketen, um den Bild-Frame zu erzeugen,
und Speichern des Bild-Frames in dem Speicher (4) des Frame- Grabbers;
die Steueranweisungsverarbeitungseinheit (313) eingerichtet ist, das Steueranweisungsdatenpaket in den Netzwerkdatenpaketen an die Rechenvorrichtung zu senden;
das Streaming-Verarbeitungs-Subsystem (311) ferner eingerichtet ist zum: Erfassen des Bild-Frames aus dem Speicher (4) und Übertragen des Bild-Frames an das Signalverarbeitungs-Subsystem (314);
das Signalverarbeitungs-Subsystem (314) eingerichtet ist, den Bild-Frame an die Paketerzeugungseinheit (315) zu senden; und
die Paketerzeugungseinheit (315) eingerichtet ist zum: Umwandeln des Bild-Frames in ein Übertragungsdatenpaket, das einem Kommunikationsbus-Übertragungsformat entspricht, und Übertragen des Übertragungsdatenpakets an die Rechenvorrichtung.

5. Frame-Grabber nach Anspruch 4, wobei das Streaming-Verarbeitungs-Subsystem (311) umfasst:
eine Decodiereinheit (3111), die eingerichtet ist, die Bilddatenpakete in den Netzwerkdatenpaketen gemäß dem vorbestimmten Bildübertragungsprotokoll zu decodieren, um den Bild-Frame zu erhalten;
eine Speicherverwaltungseinheit (3112), die eingerichtet ist, Speicherplatz des Speichers (4) des Frame-Grabbers zu verwalten;
eine Bilddirektspeicherzugriff-Schreibeinheit (3113), die eingerichtet ist zum:
Erfassen des Bild-Frames von der Decodiereinheit (3111), Beantragen von Speicherplatz in dem Speicher (4) von der Speicherverwaltungseinheit (3112) und
Schreiben des Bild-Frames in den beantragten Speicherplatz;
eine Bilddirektspeicherzugriff-Leseeinheit (3114), die eingerichtet ist zum: Erfassen einer Speicheradresse des in dem Speicher (4) gespeicherten Bild-Frames von der Speicherverwaltungseinheit (3112) und Lesen des Bild-Frames gemäß der Speicheradresse; und
eine Bildübertragungseinheit (3115), die eingerichtet ist zum: Erfassen des Bild-Frames von der Bilddirektspeicherzugriff-Leseeinheit (3114) und Übertragen des Bild-Frames an das Signalverarbeitungs-Subsystem (314).

6. Frame-Grabber nach Anspruch 4, wobei das Signalverarbeitungs-Subsystem (314) umfasst:
eine Dekompressionseinheit (3141);
eine Umgehungseinheit (3142);
eine Analyseeinheit (3143), die eingerichtet ist zum: Analysieren, ob ein von dem Streaming-Verarbeitungs-Subsystem (311) empfangener Bild-Frame ein komprimierter Bild-Frame ist, als Reaktion darauf, dass der empfangene Bild-Frame ein komprimierter Bild-Frame ist, Übertragen des komprimierten Bild-Frames an die Dekompressionseinheit (3141); und als Reaktion darauf, dass der empfangene Bild-Frame ein unkomprimierter Bild-Frame ist, Übertragen des unkomprimierten Bild-Frames an die Umgehungseinheit (3142); und
eine Multiplexeinheit (3145), die eingerichtet ist zum: Erfassen eines durch die Dekompressionseinheit (3141) ausgegebenen Bild-Frames oder eines durch die Umgehungseinheit (3142) ausgegebenen Bild-Frames und Übertragen des erfassten Bild-Frames an die Paketerzeugungseinheit (315).

7. Frame-Grabber nach Anspruch 4, wobei das Signalverarbeitungs-Subsystem (314) umfasst:
eine Dekompressionseinheit (3141), die eingerichtet ist, einen von dem Streaming-Verarbeitungs-Subsystem (311) empfangenen komprimierten Bild-Frame in einen unkomprimierten Bild-Frame zu decodieren;
eine Umgehungseinheit (3142);
eine Signalverarbeitungseinheit (3146), die eingerichtet ist, Signalverarbeitung an dem Bild-Frame durchzuführen, wobei die Signalverarbeitung mindestens eine der folgenden Verarbeitungen umfasst: digitale Verstärkung, Bayer-Interpolation, Farbkorrektur, Gammakorrektur, Farbraumumwandlung oder Schärfung;
eine Analyseeinheit (3143), die eingerichtet ist zum: Analysieren, ob ein von dem Streaming-Verarbeitungs-Subsystem (311) empfangener Bild-Frame ein komprimierter Bild-Frame ist; als Reaktion darauf, dass der empfangene Bild-Frame ein komprimierter Bild-Frame ist, Übertragen des komprimierten Bild-Frames an die Dekompressionseinheit (3141); und als Reaktion darauf, dass der empfangene Bild-Frame ein unkomprimierter Bild-Frame ist, Übertragen des unkomprimierten Bild-Frames an die Umgehungseinheit (3142) oder die Signalverarbeitungseinheit (3146) gemäß Konfigurationsinformationen, wobei die Konfigurationsinformationen eingerichtet sind, die Umgehungseinheit (3142) oder die Signalverarbeitungseinheit (3146) zu spezifizieren; und
eine Multiplexeinheit (3145), die eingerichtet ist zum: Erfassen eines durch die Dekompressionseinheit (3141) ausgegebenen Bild-Frames, eines durch die Umgehungseinheit (3142) ausgegebenen Bild-Frames oder eines durch die Signalverarbeitungseinheit (3146) ausgegebenen Bild-Frames und Übertragen des erfassten Bild-Frames an die Paketerzeugungseinheit (315).

8. Frame-Grabber nach Anspruch 4, wobei der Bildprozessor (3) ferner umfasst: ein Kommunikationsbus-Subsystem (35) und eine Planungseinheit (32);
das Bildverarbeitungs-Subsystem (31) eingerichtet ist, um den Bild-Frame und das Steueranweisungsdatenpaket an die Planungseinheit (32) zu senden;
die Planungseinheit (32) eingerichtet ist, den Bild-Frame und das Steueranweisungsdatenpaket von dem Bildverarbeitungs-Subsystem (31) an das Kommunikationsbus-Subsystem (35) zu übertragen;
das Kommunikationsbus-Subsystem (35) eingerichtet ist zum: Schreiben des Bild-Frames und des Steueranweisungsdatenpakets von dem Bildverarbeitungs-Subsystem (31) in einen Speicher der Rechenvorrichtung und Senden, nach dem Erfassen eines Computersteueranweisungsdatenpakets von der Rechenvorrichtung, des Computersteueranweisungsdatenpakets an die Planungseinheit (32);
die Planungseinheit (32) eingerichtet ist, das Computersteueranweisungsdatenpaket von der Rechenvorrichtung an die Steueranweisungsverarbeitungseinheit (313) des Bildverarbeitungs-Subsystems (31) zu senden; und
die Steueranweisungsverarbeitungseinheit (313) eingerichtet ist, das Computersteueranweisungsdatenpaket von der Rechenvorrichtung an die Kamera durch die Medienzugriffssteuereinheit (312) zu senden.

9. Frame-Grabber nach Anspruch 4, wobei der Bildprozessor (3) ferner umfasst: ein Kommunikationsbus-Subsystem (35);
die Paketerzeugungseinheit (315) ferner eingerichtet ist, eine erste Unterbrechungsanweisung, die eine Anforderung zur Übertragung des Bild-Frames darstellt, an die Rechenvorrichtung durch das Kommunikationsbus-Subsystem (35) zu senden, um es der Rechenvorrichtung zu ermöglichen, eine Bildspeicheradresse in der Rechenvorrichtung an das Kommunikationsbus-Subsystem (35) als Reaktion auf die erste Unterbrechungsanweisung zurückzugeben;
die Paketerzeugungseinheit (315) eingerichtet ist, den Bild-Frame an die Bildspeicheradresse durch das Kommunikationsbus-Subsystem (35) zu übertragen, und wenn die Übertragung des Bild-Frames abgeschlossen ist, eine zweite Unterbrechungsanweisung, die den Abschluss der Übertragung des Bild-Frames darstellt, an die Rechenvorrichtung durch das Kommunikationsbus-Subsystem (35) zu senden, um es der Rechenvorrichtung zu ermöglichen, den Bild-Frame als Reaktion auf die zweite Unterbrechungsanweisung zu verarbeiten;
die Steueranweisungsverarbeitungseinheit (313) eingerichtet ist, eine dritte Unterbrechungsanweisung, die eine Anforderung zur Übertragung eines Steueranweisungsdatenpakets darstellt, an die Rechenvorrichtung durch das Kommunikationsbus-Subsystem (35) zu senden, um es der Rechenvorrichtung zu ermöglichen, eine Anweisungsspeicheradresse in der Rechenvorrichtung an das Kommunikationsbus-Subsystem (35) als Reaktion auf die dritte Unterbrechungsanweisung zurückzugeben; und
die Steueranweisungsverarbeitungseinheit (313) eingerichtet ist, das Steueranweisungsdatenpaket an die Anweisungsspeicheradresse durch das Kommunikationsbus-Subsystem (35) zu übertragen, und wenn die Übertragung des Steueranweisungsdatenpakets abgeschlossen ist, eine vierte Unterbrechungsanweisung, die den Abschluss der Übertragung des Steueranweisungsdatenpakets darstellt, an die Rechenvorrichtung durch das Kommunikationsbus-Subsystem (35) zu senden, um es der Rechenvorrichtung zu ermöglichen, das Steueranweisungsdatenpaket als Reaktion auf die vierte Unterbrechungsanweisung zu verarbeiten.

10. Frame-Grabber nach Anspruch 8, wobei das Kommunikationsbus-Subsystem (35) ferner eingerichtet ist, eine Schreibanweisung für ein Register in dem Bildverarbeitungs-Subsystem (31) von der Rechenvorrichtung zu erfassen und die Schreibanweisung an eine Registerkonfigurationseinheit (34) des Bildverarbeitungs-Subsystems (31) zu senden;
die Registerkonfigurationseinheit (34) in dem Bildverarbeitungs-Subsystem (31) eingerichtet ist, eine Konfiguration an dem Register in dem Bildverarbeitungs-Subsystem (31) gemäß der Schreibanweisung durchzuführen; und
das Kommunikationsbus-Subsystem (35) ferner eingerichtet ist, einen Statusparameter des Registers in dem Bildverarbeitungs-Subsystem (31) von der Registerkonfigurationseinheit (34) in dem Bildverarbeitungs-Subsystem (31) zu erfassen und den Statusparameter an die Rechenvorrichtung zu senden.

11. Frame-Grabber nach Anspruch 8, wobei
die Planungseinheit (32) umfasst: eine Planungsschreibeinheit (321) und eine Planungsleseeinheit (322); und
das Kommunikationsbus-Subsystem (35) umfasst: eine Bussteuerung (351), eine Peripheral Component Interconnect Express-, PCIe-, Direktspeicherzugriff-Schreibeinheit (352), eine PCIe-Direktspeicherzugriff-Leseeinheit (353), eine Registerschreibeinheit (354) und eine Registerleseeinheit (355);
wobei die Planungsschreibeinheit (321) eingerichtet ist, den Bild-Frame und das Steueranweisungsdatenpaket von dem Bildverarbeitungs-Subsystem (31) an die PCIe-Direktspeicherzugriff-Schreibeinheit (352) des Kommunikationsbus-Subsystems (35) zu übertragen; und
die Bussteuerung (351) eingerichtet ist, eine der folgenden Operationen durchzuführen:
Anweisen der PCIe-Direktspeicherzugriff-Schreibeinheit (352), den Bild-Frame und
das Steueranweisungsdatenpaket von dem Bildverarbeitungs-Subsystem (31) in den Speicher der Rechenvorrichtung zu schreiben;
Anweisen der PCIe-Direktspeicherzugriff-Leseeinheit (353), nach dem Erfassen des Computersteueranweisungsdatenpakets von der Rechenvorrichtung, das Computersteueranweisungsdatenpaket an die Planungsleseeinheit (322) der Planungseinheit (32) zu senden;
Anweisen der Registerschreibeinheit (354), eine Schreibanweisung für ein Register in dem Bildverarbeitungs-Subsystem (31) von der Rechenvorrichtung zu erfassen und
die Schreibanweisung an eine Registerkonfigurationseinheit (34) des Bildverarbeitungs-Subsystems (31) zu senden, um es der Registerkonfigurationseinheit (34) zu ermöglichen, Konfiguration an dem Register in dem Bildverarbeitungs-Subsystem (31) gemäß der Schreibanweisung durchzuführen; oder
Anweisen der Registerleseeinheit (355), einen Statusparameter des Registers in dem Bildverarbeitungs-Subsystem (31) von der Registerkonfigurationseinheit (34) zu erfassen und den Statusparameter an die Rechenvorrichtung zu senden;
wobei die Planungsleseeinheit (322) eingerichtet ist, das Computersteueranweisungsdatenpaket von der Rechenvorrichtung an die Steueranweisungsverarbeitungseinheit (313) zu senden.

12. Bilderfassungsverfahren, angewendet auf einen Frame-Grabber, umfassend:
Erfassen (S1101) von Netzwerkdatenpaketen von einer Kamera, wobei die Netzwerkdatenpakete Bilddatenpakete umfassen, die durch die Kamera erhalten werden, die einen Bild-Frame gemäß einem vorbestimmten Bildübertragungsprotokoll einkapselt;
Decodieren (S1102) der Bilddatenpakete gemäß dem vorbestimmten Bildübertragungsprotokoll, um den Bild-Frame zu erhalten;
Zwischenspeichern (S1103) des Bild-Frames in einem Speicher des Frame-Grabbers; und
Übertragen (S1104) des in dem Speicher gespeicherten Bild-Frames an eine Rechenvorrichtung gemäß der Bildverarbeitungsfähigkeit der Rechenvorrichtung;
**dadurch gekennzeichnet, dass** das Übertragen (S1104) des in dem Speicher gespeicherten Bild-Frames an die Rechenvorrichtung gemäß der Bildverarbeitungsfähigkeit der Rechenvorrichtung umfasst:
Umwandeln des Bild-Frames in ein Übertragungsdatenpaket, das einem Kommunikationsbus-Übertragungsformat entspricht, und Übertragen des Übertragungsdatenpakets an die Rechenvorrichtung;
Senden (S1201), durch ein Kommunikationsbus-Subsystem, einer ersten Unterbrechungsanweisung, die eine Anforderung zur Übertragung des Bild-Frames darstellt, an die Rechenvorrichtung, um es der Rechenvorrichtung zu ermöglichen, eine Bildspeicheradresse in der Rechenvorrichtung als Reaktion auf die erste Unterbrechungsanweisung zurückzugeben; und
Übertragen (S1202), durch das Kommunikationsbus-Subsystem, des Bild-Frames an die Bildspeicheradresse, und wenn die Übertragung des Bild-Frames abgeschlossen ist, Senden einer zweiten Unterbrechungsanweisung, die den Abschluss der Übertragung des Bild-Frames darstellt, an die Rechenvorrichtung, um es der Rechenvorrichtung zu ermöglichen, den Bild-Frame als Reaktion auf die zweite Unterbrechungsanweisung zu verarbeiten.

13. Bilderfassungssystem, umfassend:
mindestens eine Kamera;
den Frame-Grabber nach einem der Ansprüche 1-11; und
eine Rechenvorrichtung.

## Revendications

1. Dispositif de saisie de trame, comprenant :
au moins un émetteur-récepteur de couche physique Ethernet (1) ;
un bus de communication (2) ;
un processeur d'image (3), comprenant un sous-système de bus de communication (35) et au moins un sous-système de traitement d'image (31), dans lequel chacun de l'au moins un sous-système de traitement d'image (31) est configuré pour communiquer avec une caméra par l'intermédiaire de l'au moins un émetteur-récepteur de couche physique Ethernet, et communiquer avec un dispositif informatique par l'intermédiaire du bus de communication (2) ; et
une mémoire (4), couplée au processeur d'image (3) ;
dans lequel pour chacun de l'au moins un sous-système de traitement d'image (31), le sous-système de traitement d'image (31) est configuré pour :
acquérir des paquets de données de réseau à partir de la caméra, les paquets de données de réseau comprennent des paquets de données d'image obtenus par la caméra encapsulant une trame d'image conformément à un protocole de transmission d'image prédéterminé ;
décoder les paquets de données d'image conformément au protocole de transmission d'image prédéterminé pour obtenir la trame d'image ;
mettre en cache la trame d'image dans la mémoire (4) ; et
transmettre la trame d'image stockée dans la mémoire (4) au dispositif informatique conformément à une capacité de traitement d'image du dispositif informatique ;
dans lequel le sous-système de traitement d'image (31) comprend une unité de génération de paquets (315), configurée pour :
convertir la trame d'image en un paquet de données de transmission conforme à un format de transmission de bus de communication, et transmettre le paquet de données de transmission au dispositif informatique,
envoyer une première instruction d'interruption représentant une demande de transmission de la trame d'image au dispositif informatique par l'intermédiaire du sous-système de bus de communication (35), de manière à permettre au dispositif informatique de renvoyer une adresse de stockage d'image dans le dispositif informatique au sous-système de bus de communication (35) en réponse à la première instruction d'interruption ; et
transmettre la trame d'image à l'adresse de stockage d'image par l'intermédiaire du sous-système de bus de communication (35), et lorsque la transmission de la trame d'image est terminée, envoyer une seconde instruction d'interruption représentant l'achèvement de la transmission de la trame d'image au dispositif informatique par l'intermédiaire du sous-système de bus de communication (35), de manière à permettre au dispositif informatique de traiter la trame d'image en réponse à la seconde instruction d'interruption.

2. Dispositif de saisie de trame selon la revendication 1, dans lequel, avant de transmettre la trame d'image stockée dans la mémoire (4) au dispositif informatique, le sous-système de traitement d'image (31) est en outre configuré pour :
effectuer un traitement de données sur la trame d'image, dans lequel le traitement de données comprend au moins l'un des traitements suivants : décompression, gain numérique, interpolation de Bayer, correction de couleur, correction gamma, conversion d'espace de couleur, ou accentuation de netteté.

3. Dispositif de saisie de trame selon la revendication 1, dans lequel le processeur d'image (3) comprend en outre :
un sous-système de bus de communication (35), configuré pour communiquer avec le dispositif informatique par l'intermédiaire du bus de communication (2) ;
une unité de planification (32), configurée pour recevoir des données de l'au moins un sous-système de traitement d'image (31) et envoyer les données reçues au sous-système de bus de communication (35), dans lequel le sous-système de bus de communication (35) est configuré pour envoyer les données reçues de l'unité de planification (32) au dispositif informatique par l'intermédiaire du bus de communication (2) ;
un processeur (33), configuré pour effectuer une configuration sur un registre de l'au moins un émetteur-récepteur de couche physique Ethernet (1) ; et
une unité de configuration de registre (34), configurée pour effectuer une configuration sur un registre de l'au moins un sous-système de traitement d'image (31) selon une instruction de configuration provenant du dispositif informatique.

4. Dispositif de saisie de trame selon la revendication 1, dans lequel les paquets de données de réseau comprennent en outre : un paquet de données d'instruction de commande ;
le sous-système de traitement d'image (31) comprend :
un sous-système de traitement de diffusion en continu (311) ;
une unité de commande d'accès au support (312), configurée pour recevoir un flux de données provenant de l'un de l'au moins un émetteur-récepteur de couche physique Ethernet (1) et générer les paquets de données de réseau selon le flux de données ;
une unité de traitement d'instruction de commande (313) ;
un sous-système de traitement de signal (314) ;
une unité de génération de paquets (315) ; et
une unité d'arbitrage (316), configurée pour : recevoir les paquets de données de réseau de l'unité de commande d'accès au support (312), envoyer les paquets de données d'image dans les paquets de données de réseau au sous-système de traitement de diffusion en continu (311), et envoyer le paquet de données d'instruction de commande dans les paquets de données de réseau à l'unité de traitement d'instruction de commande (313),
dans lequel le sous-système de traitement de diffusion en continu (311) est configuré pour : décoder les paquets de données d'image dans les paquets de données de réseau pour générer la trame d'image, et stocker la trame d'image dans la mémoire (4) du dispositif de saisie de trame ;
l'unité de traitement d'instruction de commande (313) est configurée pour envoyer le paquet de données d'instruction de commande dans les paquets de données de réseau au dispositif informatique ;
le sous-système de traitement de diffusion en continu (311) est en outre configuré pour : acquérir la trame d'image à partir de la mémoire (4), et transmettre la trame d'image au sous-système de traitement de signal (314) ;
le sous-système de traitement de signal (314) est configuré pour envoyer la trame d'image à l'unité de génération de paquets (315) ; et
l'unité de génération de paquets (315) est configurée pour : convertir la trame d'image en un paquet de données de transmission conforme à un format de transmission de bus de communication, et transmettre le paquet de données de transmission au dispositif informatique.

5. Dispositif de saisie de trame selon la revendication 4, dans lequel le sous-système de traitement de diffusion en continu (311) comprend :
une unité de décodage (3111), configurée pour décoder les paquets de données d'image dans les paquets de données de réseau conformément au protocole de transmission d'image prédéterminé pour obtenir la trame d'image ;
une unité de gestion de mémoire (3112), configurée pour gérer l'espace de stockage de la mémoire (4) du dispositif de saisie de trame ;
une unité d'écriture d'accès direct à la mémoire d'image (3113), configurée pour :
acquérir la trame d'image à partir de l'unité de décodage (3111), demander l'espace de stockage dans la mémoire (4) à partir de l'unité de gestion de mémoire (3112), et
écrire la trame d'image dans l'espace de stockage alloué ;
une unité de lecture d'accès direct à la mémoire d'image (3114), configurée pour :
acquérir une adresse de stockage de la trame d'image stockée dans la mémoire (4) à partir de l'unité de gestion de mémoire (3112), et lire la trame d'image conformément à l'adresse de stockage ; et
une unité de transmission d'image (3115), configurée pour : acquérir la trame d'image à partir de l'unité de lecture d'accès direct à la mémoire d'image (3114), et transmettre la trame d'image au sous-système de traitement de signal (314).

6. Dispositif de saisie de trame selon la revendication 4, dans lequel le sous-système de traitement de signal (314) comprend :
une unité de décompression (3141) ;
une unité de contournement (3142) ;
une unité d'analyse (3143), configurée pour : analyser si une trame d'image reçue du sous-système de traitement de diffusion en continu (311) est une trame d'image compressée, en réponse au fait que la trame d'image reçue est une trame d'image compressée, transmettre la trame d'image compressée à l'unité de décompression (3141) ; et en réponse au fait que la trame d'image reçue est une trame d'image non compressée, transmettre la trame d'image non compressée à l'unité de contournement (3142) ; et
une unité de multiplexage (3145), configurée pour : acquérir une trame d'image délivrée en sortie par l'unité de décompression (3141) ou une trame d'image délivrée en sortie par l'unité de contournement (3142), et transmettre la trame d'image acquise à l'unité de génération de paquets (315).

7. Dispositif de saisie de trame selon la revendication 4, dans lequel le sous-système de traitement de signal (314) comprend :
une unité de décompression (3141), configurée pour décoder une trame d'image compressée reçue du sous-système de traitement de diffusion en continu (311) en une trame d'image non compressée ;
une unité de contournement (3142) ;
une unité de traitement de signal (3146), configurée pour effectuer un traitement de signal sur la trame d'image, dans lequel le traitement de signal comprend au moins l'un des traitements suivants : gain numérique, interpolation de Bayer, correction de couleur, correction gamma, conversion d'espace de couleur, ou accentuation de netteté ;
une unité d'analyse (3143), configurée pour : analyser si une trame d'image reçue du sous-système de traitement de diffusion en continu (311) est une trame d'image compressée ; en réponse au fait que la trame d'image reçue est une trame d'image compressée, transmettre la trame d'image compressée à l'unité de décompression (3141) ; et en réponse au fait que la trame d'image reçue est une trame d'image non compressée, transmettre la trame d'image non compressée à l'unité de contournement (3142) ou à l'unité de traitement de signal (3146) selon des informations de configuration, dans lequel les informations de configuration sont configurées pour spécifier l'unité de contournement (3142) ou l'unité de traitement de signal (3146) ; et
une unité de multiplexage (3145), configurée pour : acquérir une trame d'image délivrée en sortie par l'unité de décompression (3141), une trame d'image délivrée en sortie par l'unité de contournement (3142), ou une trame d'image délivrée en sortie par l'unité de traitement de signal (3146), et transmettre la trame d'image acquise à l'unité de génération de paquets (315).

8. Dispositif de saisie de trame selon la revendication 4, dans lequel le processeur d'image (3) comprend en outre : un sous-système de bus de communication (35) et une unité de planification (32) ;
le sous-système de traitement d'image (31) est configuré pour envoyer la trame d'image et le paquet de données d'instruction de commande à l'unité de planification (32) ;
l'unité de planification (32) est configurée pour transmettre la trame d'image et le paquet de données d'instruction de commande du sous-système de traitement d'image (31) au sous-système de bus de communication (35) ;
le sous-système de bus de communication (35) est configuré pour : écrire la trame d'image et le paquet de données d'instruction de commande à partir du sous-système de traitement d'image (31) dans une mémoire du dispositif informatique, et envoyer, après l'acquisition d'un paquet de données d'instruction de commande informatique à partir du dispositif informatique, le paquet de données d'instruction de commande informatique à l'unité de planification (32) ;
l'unité de planification (32) est configurée pour envoyer le paquet de données d'instruction de commande informatique à partir du dispositif informatique à l'unité de traitement d'instruction de commande (313) du sous-système de traitement d'image (31) ; et
l'unité de traitement d'instruction de commande (313) est configurée pour envoyer le paquet de données d'instruction de commande informatique à partir du dispositif informatique à la caméra par l'intermédiaire de l'unité de commande d'accès au support (312).

9. Dispositif de saisie de trame selon la revendication 4, dans lequel le processeur d'image (3) comprend en outre : un sous-système de bus de communication (35) ; l'unité de génération de paquets (315) est en outre configurée pour envoyer une première instruction d'interruption représentant une demande de transmission de la trame d'image au dispositif informatique par l'intermédiaire du sous-système de bus de communication (35), de manière à permettre au dispositif informatique de renvoyer une adresse de stockage d'image dans le dispositif informatique au sous-système de bus de communication (35) en réponse à la première instruction d'interruption ; l'unité de génération de paquets (315) est configurée pour transmettre la trame d'image à l'adresse de stockage d'image par l'intermédiaire du sous-système de bus de communication (35), et lorsque la transmission de la trame d'image est terminée, envoyer une seconde instruction d'interruption représentant l'achèvement de la transmission de la trame d'image au dispositif informatique par l'intermédiaire du sous-système de bus de communication (35), de manière à permettre au dispositif informatique de traiter la trame d'image en réponse à la seconde instruction d'interruption ;
l'unité de traitement d'instruction de commande (313) est configurée pour envoyer une troisième instruction d'interruption représentant une demande de transmission d'un paquet de données d'instruction de commande au dispositif informatique par l'intermédiaire du sous-système de bus de communication (35), de manière à permettre au dispositif informatique de renvoyer une adresse de stockage d'instruction dans le dispositif informatique au sous-système de bus de communication (35) en réponse à la troisième instruction d'interruption ; et
l'unité de traitement d'instruction de commande (313) est configurée pour transmettre le paquet de données d'instruction de commande à l'adresse de stockage d'instruction par l'intermédiaire du sous-système de bus de communication (35), et lorsque la transmission du paquet de données d'instruction de commande est terminée, envoyer une quatrième instruction d'interruption représentant l'achèvement de la transmission du paquet de données d'instruction de commande au dispositif informatique par l'intermédiaire du sous-système de bus de communication (35), de manière à permettre au dispositif informatique de traiter le paquet de données d'instruction de commande en réponse à la quatrième instruction d'interruption.

10. Dispositif de saisie de trame selon la revendication 8, dans lequel le sous-système de bus de communication (35) est en outre configuré pour acquérir une instruction d'écriture pour un registre dans le sous-système de traitement d'image (31) à partir du dispositif informatique, et envoyer l'instruction d'écriture à une unité de configuration de registre (34) du sous-système de traitement d'image (31) ;
l'unité de configuration de registre (34) dans le sous-système de traitement d'image (31) est configurée pour effectuer une configuration sur le registre dans le sous-système de traitement d'image (31) selon l'instruction d'écriture ; et
le sous-système de bus de communication (35) est en outre configuré pour acquérir un paramètre d'état du registre dans le sous-système de traitement d'image (31) à partir de l'unité de configuration de registre (34) dans le sous-système de traitement d'image (31), et envoyer le paramètre d'état au dispositif informatique.

11. Dispositif de saisie de trame selon la revendication 8, dans lequel l'unité de planification (32) comprend : une unité d'écriture de planification (321) et une unité de lecture de planification (322) ; et
le sous-système de bus de communication (35) comprend : un contrôleur de bus (351), une unité d'écriture d'accès direct à la mémoire d'interconnexion de composants périphériques express, PCIe, (352), une unité de lecture d'accès direct à la mémoire PCIe (353), une unité d'écriture de registre (354), et une unité de lecture de registre (355) ;
dans lequel l'unité d'écriture de planification (321) est configurée pour transmettre la trame d'image et le paquet de données d'instruction de commande du sous-système de traitement d'image (31) à l'unité d'écriture d'accès direct à la mémoire PCIe (352) du sous-système de bus de communication (35) ; et
le contrôleur de bus (351) est configuré pour effectuer l'une des opérations suivantes :
ordonner à l'unité d'écriture d'accès direct à la mémoire PCIe (352) d'écrire la trame d'image et le paquet de données d'instruction de commande du sous-système de traitement d'image (31) dans la mémoire du dispositif informatique ;
ordonner à l'unité de lecture d'accès direct à la mémoire PCIe (353) d'envoyer, après l'acquisition du paquet de données d'instruction de commande informatique à partir du dispositif informatique, le paquet de données d'instruction de commande informatique à l'unité de lecture de planification (322) de l'unité de planification (32) ;
ordonner à l'unité d'écriture de registre (354) d'acquérir une instruction d'écriture pour un registre dans le sous-système de traitement d'image (31) à partir du dispositif informatique, et envoyer l'instruction d'écriture à une unité de configuration de registre (34) du sous-système de traitement d'image (31), de manière à permettre à l'unité de configuration de registre (34) d'effectuer une configuration sur le registre dans le sous-système de traitement d'image (31) selon l'instruction d'écriture ; ou
ordonner à l'unité de lecture de registre (355) d'acquérir un paramètre d'état du registre dans le sous-système de traitement d'image (31) à partir de l'unité de configuration de registre (34), et envoyer le paramètre d'état au dispositif informatique ;
dans lequel l'unité de lecture de planification (322) est configurée pour envoyer le paquet de données d'instruction de commande informatique à partir du dispositif informatique à l'unité de traitement d'instruction de commande (313).

12. Procédé de capture d'image, appliqué à un dispositif de saisie de trame, comprenant :
l'acquisition (S1101) de paquets de données de réseau à partir d'une caméra, dans lequel les paquets de données de réseau comprennent des paquets de données d'image obtenus par la caméra encapsulant une trame d'image conformément à un protocole de transmission d'image prédéterminé ;
le décodage (S1102) des paquets de données d'image conformément au protocole de transmission d'image prédéterminé pour obtenir la trame d'image ;
la mise en cache (S1103) de la trame d'image dans une mémoire du dispositif de saisie de trame ; et
la transmission (S1104) de la trame d'image stockée dans la mémoire à un dispositif informatique conformément à une capacité de traitement d'image du dispositif informatique ;
**caractérisé en ce que** la transmission (S1104) de la trame d'image stockée dans la mémoire au dispositif informatique conformément à une capacité de traitement d'image du dispositif informatique comprend :
la conversion de la trame d'image en un paquet de données de transmission conforme à un format de transmission de bus de communication, et la transmission du paquet de données de transmission au dispositif informatique ;
l'envoi (S1201), par l'intermédiaire d'un sous-système de bus de communication, d'une première instruction d'interruption représentant une demande de transmission de la trame d'image au dispositif informatique, de manière à permettre au dispositif informatique de renvoyer une adresse de stockage d'image dans le dispositif informatique en réponse à la première instruction d'interruption ; et
la transmission (S1202), par l'intermédiaire du sous-système de bus de communication, de la trame d'image à l'adresse de stockage d'image, et lorsque la transmission de la trame d'image est terminée, l'envoi d'une seconde instruction d'interruption représentant l'achèvement de la transmission de la trame d'image au dispositif informatique, de manière à permettre au dispositif informatique de traiter la trame d'image en réponse à la seconde instruction d'interruption.

13. Système de capture d'image, comprenant :
au moins une caméra ;
le dispositif de saisie de trame selon l'une quelconque des revendications 1 à 11 ; et
un dispositif informatique.
